# EUROPEAN PATENT SPECIFICATION

(11) **EP 2 174 513 B1**
(45) Date of publication and mention of the grant of the patent: **21.05.2014**
(21) Application number: 08782418.1
(22) Date of filing: 25.07.2008
(51) Int. Cl.: H04N 13/04

(54) **HEAD-MOUNTED SINGLE PANEL STEREOSCOPIC DISPLAY**
AM KOPF ANGEBRACHTE EINZELSCHIRM-STEREOANZEIGE
AFFICHAGE STÉRÉOSCOPIQUE À PANNEAU UNIQUE MONTÉ SUR LA TÊTE

(30) Priority: 26.07.2007 US 952134 P
(43) Date of publication of application: 14.04.2010
(73) Proprietor: RealD Inc., Beverly Hills, CA 90210 (US)
(72) Inventor: ROBINSON, Michael, G., Beverly Hills, CA 90210 (US)
(74) Representative: Beck, Simon Antony
(86) International application number: PCT/US2008/071268
(87) International publication number: WO 2009/015375

(56) References cited:
- US-A- 5 912 650
- US-A1- 2001 005 185
- US-A1- 2003 214 631
- US-A1- 2004 004 584
- US-B1- 6 239 908
- US-B1- 7 195 356

## Description

### TECHNICAL FIELD

The following disclosure generally relates to single-panel stereoscopic displays, and more particularly to single-panel stereoscopic head-mounted displays (HMDs).

### BACKGROUND

Head-mounted displays resemble glasses that allow video images to be seen by the wearer as if viewing a conventional display. They have been investigated for many years, resulting in several commercially available products (*e.g.,* InViso eShades, Sony Glasstron, 1-0 Displays i-glasses, Olympus Eye-Trek, and eMagin 2800). Conventional HMD implementations include two display panels, one for each eye. When viewed by the eye, a display panel appears as an extremely small TV screen capable of displaying full color video, providing the image the viewer will see while equipping the head-mounted display system. Two-panel HMDs are stereoscopic-enabled since independent images can be displayed in right and left eyes.

US 6,239,908 discloses a display in which temporally interlaced sequences of images are directed towards a viewers eyes. In one embodiment the images are directed along beam splitting paths and first and second shutters are controlled in synchronism with the image display. In another embodiment the images are switched between first and second paths by switching the polarization state of the image display and by using a polarizing beam splitter.

US 2001/0005185 discloses a display apparatus where a single image display device is directed along two paths, for example by use of a cross prism. Liquid crystal shutters may then be used to transmit or block the light.

### SUMMARY

According to a first aspect of the invention there is provided a single panel head mounted display system as claimed in claim 1.

According to a second aspect of the present invention there is provided a method as claimed in claim 9.

Single-panel HMDs offer several advantages over two-panel HMDs. For example, single-panel HMDs provide better color and intensity matching between the eyes. Panels of a two-panel HMD can be matched accurately prior to sale, but varying material lifetimes often cause undetermined modification of color balance and intensity. This often goes unnoticed in a single panel, but usually becomes obvious when differences are apparent between eyes in two-panel HMDs. Using a single panel avoids eye-to-eye variation as a function of time. Another advantage of a single-panel HMD is related to optical magnification. Creating a large virtual image from a small display panel, or microdisplay, situated close to the eye requires powerful optics that are both expensive and heavy. Using a single panel for cost reduction, magnification, and optical matching reasons makes stereoscopic viewing more challenging.

A single-panel HMD would place the display between the eyes for symmetry and allow a greater working distance and more flexibility with magnification optics. However, one panel does not lend itself to stereoscopic imagery since similar images are seen by both eyes. To enable stereoscopic viewing, different images may be directed at the eyes, which in general can be done either through spatial or temporal techniques. In the former case, half the pixels are seen by one eye, with the remainder forming an image in the second eye. The latter is more compatible with fast microdisplay technology, where at any one time only one eye sees an image. By providing time sequential stereo imagery at a frame rate greater than 50Hz in each eye, flicker free, full resolution 3D can be visualized. In this regard, the present disclosure generally relates to embodiments utilizing a single microdisplay ("display") panel that is capable of displaying sequential, full resolution images. In some embodiments, the images are displayed at a frame rate in excess of 100Hz.

Directing alternate images from a single panel into left and right eyes sequentially is provided herein using various embodiments of optical switching. One approach involves directing light from a first set of RGB-illuminated LEDs at a first eye only (See, e.g., US Pat. Nos. 7,057,824 and 6,989,935). Turning these LEDs on in synchronization with the displayed image then allows monocular viewing. Incorporating a second LED illumination can create a symmetrical monocular view in the second eye. Interlacing the illumination provides time sequential stereo viewing. This approach is specific to modulating panels such as liquid crystal microdisplays, and is not possible with more recent emissive technologies such as organic light emitting polymer (OLEP) panels. This approach also employs angular aperturing of the illumination, and results in output pupil reduction. This manifests itself (if not corrected by complex relay optics) as an image that disappears at one region as the eye looks at an opposing region. For example, if the viewer looks toward the left edge, the right edge disappears.

In one embodiment, a single-panel HMD system includes a display panel operable to provide an unpolarized image input light beam, and a PBS operable to split the image input light beam into first and second image output light beams. The first and second image output light beams correspond to left-eye and right-eye images, respectively. This embodiment of an HMD system further includes first and second LC switches disposed in the light paths of the first and second output light beams, respectively. The first and second LC switches are operable to modulate the first and second light beams, respectively.

Embodiments according to the disclosed principles may be modified to include a plurality of reflective optic elements operable to fold the light path of the first or second image output light beam, and direct the first or second image output light beam to a viewer's left or right eye, respectively. Specifically, the plurality of reflective optic elements may comprise first and second reflective optics, wherein the first reflective optic is operable to receive the first or second image output light beam and direct the first or second image output light beam to the second reflective optic, and the second reflective optic is operable to direct the first or second image output light beam to the viewer's left or right eye, respectively. In some embodiments, the single-panel HMD system may alternatively or additionally include a refractive optic adjacent to the first or second LC switch, the refractive optic being operable to converge the first or second image output light beam.

### BRIEF DESCRIPTION OF THE DRAWINGS

Embodiments are illustrated by way of example in the accompanying figures, in which like reference numbers indicate similar parts, and in which:
FIGURE 1a is a schematic diagram of a single-panel, single-polarization switch approach to a single-panel stereoscopic HMD;
FIGURE 1b is a schematic diagram of a single-panel, dual-polarization switch approach to a single-panel stereoscopic HMD;
FIGURE 2 is an optically symmetric approach to a HMD single-panel system;
FIGURE 3 is an optically symmetric approach to a HMD single-panel system showing the inclusion of polarization conditioning films before, after or sandwiching the LC intensity modulating switches;
FIGURE 4 is a system employing a double-bounce optical path through polarization manipulation means;
FIGURE 5a is an exemplary single-panel HMD system including a combination of refractive and reflective elements;
FIGURE 5b is a variation of the system of FIGURE 5a in which a single LC modulator is employed;
FIGURE 5c is a variation of the system of FIGURE 5b in which a modulating LC panel is used;
FIGURE 5d illustrates an embodiment employing a polarization-sensitive first reflecting optic and a polarization-manipulating film (e.g. a quarter wave plate QWP) on a second reflecting optic to allow double-pass through the former;
FIGURE 6 illustrates an embodiment wherein the first reflecting optic is tilted with respect to the system's optic axis allowing the second reflecting optic to be substantially normal to the system's optic axis;
FIGURE 7 illustrates another embodiment in which multiple refractive imaging optics are used;
FIGURE 8 shows another embodiment in which total internal reflection is used to allow double-pass through a Total Internal Reflection (TIR) prism; and
FIGURE 9 is another embodiment of the system in FIGURE 7 in which a Mangin reflecting lens is used with a TIR prism.

### DETAILED DESCRIPTION

Microdisplays can either modulate light, as in the case of liquid crystal displays (LCD), or emit light as, for example, in those using organic light emitting diode (OLED) technology. In the former case, light incident on the panel is manipulated in polarization by individual pixels such that a controlled proportion is eventually seen by the viewer. In some embodiments, LCD microdisplays modulate intensity of incident illumination and provide color through sequential illumination and independent modulation of primary red, green and blue light. In some other embodiments, emitting displays provide independent colored sub-pixels. Pixel information is provided one row at a time via a matrix of addressing electrodes. Providing information to the display for operation greater than 100Hz is not typically a limitation in such small displays, but the response time of certain Liquid Crystal (LC) materials can be limiting. When viewed by the eye, a microdisplay appears as a 'postage-sized' TV screen capable of displaying full color video. Directly emitted light, such as that for OLED microdisplays, is generally unpolarized, whereas modulated light from LC devices is substantially polarized. Both cases are applicable to the proposed single-panel HMD embodiments as they can be manipulated into orthogonal polarization states associated with left- and right-eye images via a polarizing beam splitter.

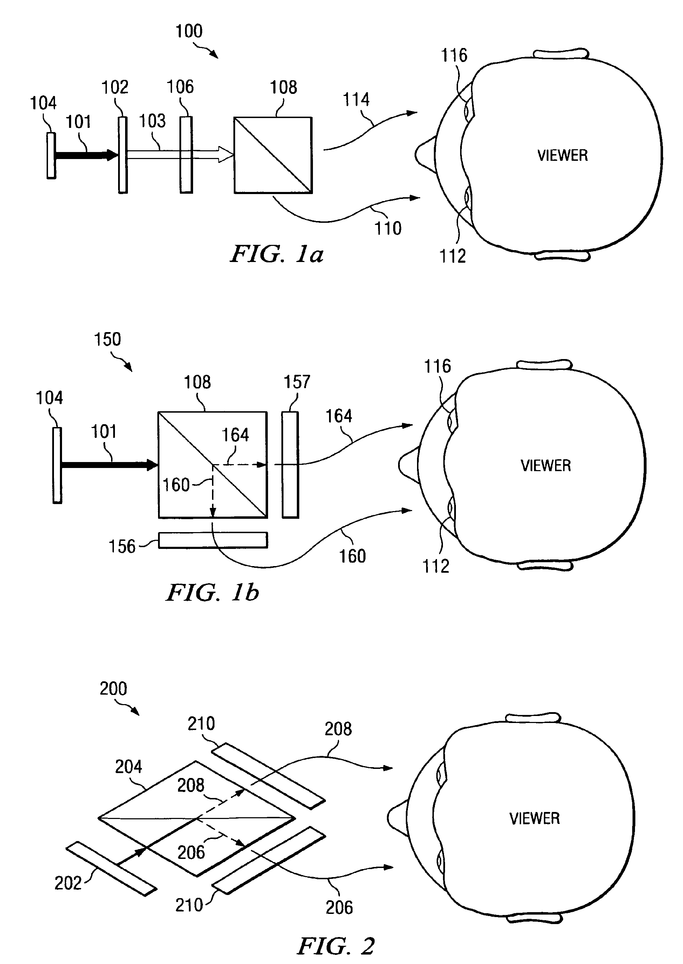

Referring to FIGURES 1a and 1b, light emanating from a display panel 104 is first directed to a polarizing beam splitter (PBS) 108, which directs the light to form two near-identical optical imaging outputs corresponding to left-eye and right-eye images. For stereoscopic (3D) operation, the light is modulated such that an image is seen in only one eye at a time. For conventional 2D imagery, the same image can be viewed by both eyes. The modulation may be achieved as illustrated in FIGURES 1a and 1b. A single-panel HMD 100, illustrated in FIGURE 1a, includes a panel 104, a PBS 108, and a polarizer 102 disposed between the panel 104 and PBS 108. The polarizer 102 receives a light beam 101 from the panel 104 and provides a substantially polarized light beam 103 along a first path. This configuration is particularly efficient in embodiments in which the panel 104 is a LC microdisplay, because the light beam 101 from a LC microdisplay would already be substantially polarized. The single-panel HMD 100 further includes a LC switch 106 disposed between the polarizer 102 and the PBS 108. The LC switch 106 is configured to modulate the polarized light beam 103 by manipulating the polarized light beam 103 between two possible orthogonal polarization states (e.g., s- and p-polarized). The polarized light beam 103 is incident upon the PBS 108, which either transmits or reflects the polarized light beam 103 depending on the polarization of the light beam 103. The reflected polarized light beam 103 travels along a second light path 110 and the transmitted polarized light beam 103 travels along a third light path 114. The second and third light paths 110 and 114 correspond to left-eye and right-eye images, respectively. As illustrated in FIGURE 1a, the reflected light beam 110 includes a left-eye image and travels along a light path to the left eye 112, and the transmitted light beam 114 includes the right-eye image and travels along a light path to the right eye 116.

In the embodiment illustrated in FIGURE 1b, a single-panel HMD 150 includes a panel 104, a PBS 108, and LC switches 156 and 157 at the output ports of the PBS 108. Light beam 101 from the panel 104 is incident upon the PBS 108, which reflects and directs a first portion of the light beam 101 having a first polarization to be incident upon a first LC switch 156. The light of the first polarization corresponds to a left-eye image, and is modulated by the first LC switch 156, which either transmits or blocks the light of the first polarization. Light transmitted through the first LC switch 156 travels along a first light path (160) to the left eye 112. The PBS 108 transmits and directs a second portion of the light beam 101 having a second polarization to be incident upon a second LC switch 157. The second LC switch 157 similarly modulates the light of the second polarization by either transmitting or blocking it. The light of the second polarization corresponds to a right-eye image and travels to the right eye if transmitted (164). The LC switches 156 and 157 drive 180° out of phase, which means the first LC switch 156 would transmit the light of the first polarization while the second LC switch 157 blocks the light of the second polarization, and vice versa. The operation of the LC switches 156 and 157 alternates such that one image is transmitted to one eye, while the other image is blocked. The switching of the operation between the LC switches 156 and 157 allows for a single image to be viewed by only one eye at any moment in time. The approach illustrated in FIGURE 1a is preferable for panels providing pre-polarized light, such as LC modulating panels. The approach illustrated in FIGURE 1b is preferable for unpolarized emissive-type panel technologies such as Organic Light-Emitting Diodes (OLEDs).

An aspect of the present disclosure is related to symmetry between eyes. Referring to **FIGURE 2****,** the single-panel HMD 200 includes a display panel 202, a PBS 204, and LC switches 210. The illustrated offset position of the display panel 202 with respect to the PBS 204 allows the left- and right-eye image outputs to be optically symmetric. In FIGURE 2, the light emitted from the surface of the display panel 202 is split into two light beams 206 and 208 of substantially equal intensities by the PBS 204. The two light beams 206 and 208 emitted from the PBS 204 travel in light paths symmetrical across the optical axis, wherein the optical axis corresponds to an axis of symmetry between the viewer's eyes. Each light beam is directed to be incident upon a LC switch 210, which can block or transmit it. Driving out of phase, similar to the embodiment of FIGURE 1b, these switches 210 alternate the light beams 206 and 208 to the left and right eyes, respectively. Optical symmetry is desirable, as asymmetry can lead to magnification and distortion differences between left- and right-eye images, causing viewer fatigue. Another optical concern is polarization. Optical elements are polarization sensitive, so similar polarization states could be ensured through left- and right-eye imaging systems. In this regard, polarization manipulating films can be incorporated into the single-panel HMD 200 to assist in providing similar polarization states exiting the PBS/modulator subsystem.

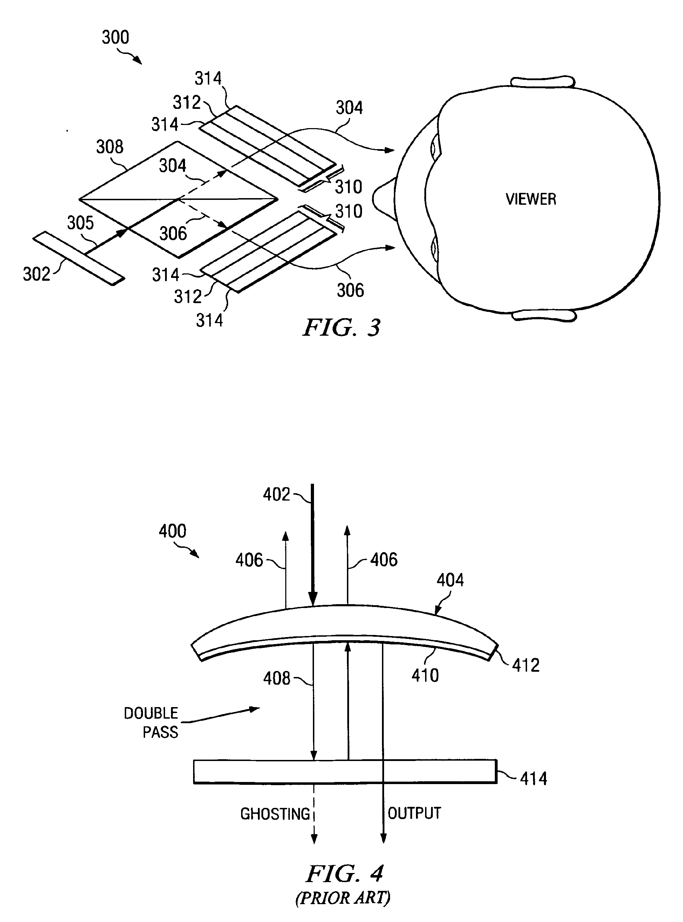

Several embodiments of the present disclosure also employ symmetrical polarization and imaging optics. Referring to FIGURE 3, the single-panel HMD 300 system illustrates an optically symmetric embodiment, including LC switches 310, an emissive microdisplay panel 302, and a PBS 308. The microdisplay panel 302 emits a first substantially unpolarized light beam 305, wherein the light beam 305 is capable of providing alternate left- and right-eye images at a frame rate exceeding 100Hz. The light beam 305 emitted from the surface of the microdisplay panel 302 is split into two substantially orthogonally-polarized light beams 304 and 306 of substantially equal intensities by the PBS 308. Each light beam 304 and 306 corresponds to right- and left-eye images, respectively, and is directed to be incident upon the corresponding LC switch 310, which either blocks or transmits it. Driving out of phase, similar to the embodiment of FIGURE 1b, these switches 310 alternate the light beams 304 and 306 to the right and left eyes, respectively.

In some embodiments, the LC switches 310 may comprise polarization conditioning films 314 adjacent to a LC cell 312 to ensure symmetrical polarization output. Suitable polarization conditioning films 314 may include various birefringent materials (e.g. stretched polymer, inorganic crystal, polymerized liquid crystal, etc) provided there is enough intensity available to the system to overcome transient losses. In some embodiments, faster LC modes such as the pi-mode are implemented, but the more cost-effective STN approach offers a reasonable solution.

An exemplary microdisplay panel may include current OLED technology, while an exemplary PBS could be a dichroic coated prism, commonly called a MacNeille-type, or possibly a buried wire grid polarizer, which provides increased off-axis performance. Current multi-layer birefringent film PBSs, such as 3M's Vikuiti product, currently have unacceptable aberrations in the reflected path, but improved products of this type may be an option in the future.

The input polarization to the PBS 308 as well as the polarization states exiting into the folded imaging optics for each eye can be optimized for efficiency and symmetry with retarder films, if required, through one or more retarders at the input or exit of the PBS 308 faces. The preferred input polarization depends on the desired incident angle and chromatic performance. It is of relative importance that the polarization exiting into the symmetrical imaging systems is substantially the same, and in some embodiments, s-polarized to maximize reflection efficiencies in subsequent optical elements.

HMD systems generally include imaging optics that allow magnification of the microdisplay within the confines of the necessarily small system. In general, large magnification without undesirable distortion requires a large optical path length between the panel and the eye. One option is to provide systems that fold the light between optical elements. This approach can be achieved with minimal ghosting in polarized systems such as that shown in **FIGURE 4****.** The folded optical element 400 of FIGURE 4 includes a curved semi-transparent mirror element 404 and a polarization-selective reflector 414. The curved semi-transparent mirror element 404 includes a polarization-manipulation film 410 and a metalized reflecting surface 412. In some embodiments, the polarization-manipulation film 410 could be a quarter wave plate (QWP), while the polarization-selective reflector 414 could be a wire grid coated substrate as provided commercially by Moxtek Inc. In the folded optical element 400, circularly polarized input light 402 coming from a display enters from the top and passes through the curved semi-transparent mirror element 404, where a lost proportion 406 of the light 402 is reflected back. The transmitted light 408 passing through the semi-transparent mirror element 404 is transformed into a substantially linear polarization by the polarization-manipulation film 410 disposed between the metalized surface 412, and the polarization-selective reflector 414. This light 408 can then be reflected back away from the eye by the polarization-selective reflector 414. Retaining its linear polarization state, the light 408 then passes back through the polarization-manipulation film 410, reflects off the metalized surface 412 (losing some light 406 to transmission), and then proceeds once again through the polarization-manipulation film 410 toward a viewer's eye. The double-pass through the polarization-manipulation film 410 acts to substantially transform the polarization of the input light 402 into a state that passes through the reflecting (wire grid) surface of the polarization-selective reflector 414 and is seen by the viewer's eye. In the embodiment illustrated in FIGURE 4, the polarization-manipulation film 410 is disposed on the curved semi-transparent mirror element 404. This orientation provides the advantage of avoiding unwanted normally reflected light. In other embodiments, the polarization-manipulation film 410 may be disposed anywhere between the semi-transparent metalized surface 412 and the polarization-selective reflector 414. The increased optical path and curved reflecting surface of folded optic element 400 offers a significant advantage in HMD system embodiments, as certain elements, such as large magnification without undesirable distortion, have a large optical path length between the panel and the eye.

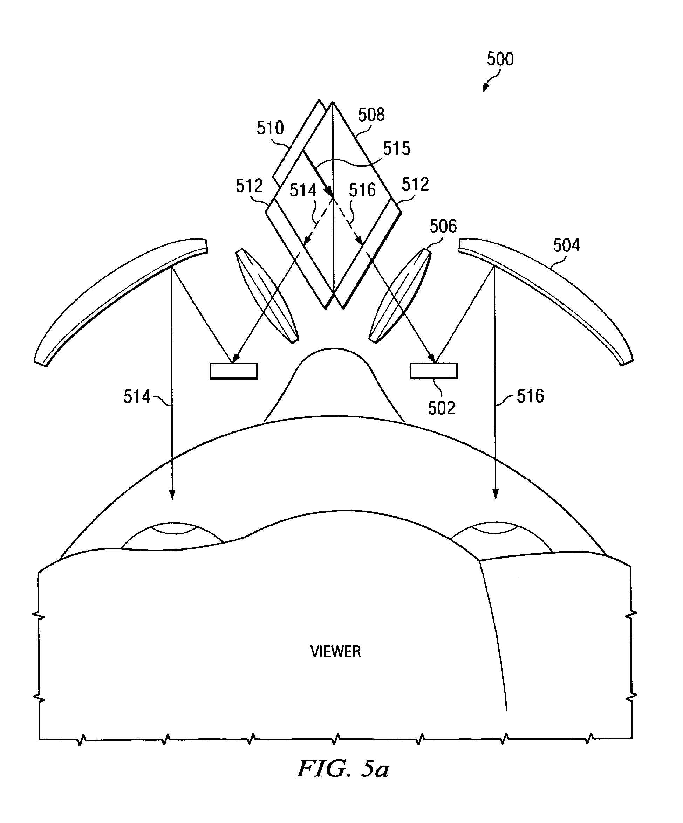

Referring to FIGURES 5a - 5d, the disclosed embodiments include a display panel 510, a PBS 508, and a plurality of reflective optic elements operable to fold the imaging paths using first 502 and second 504 reflecting elements. Each of these reflective optic elements can be curved to form part of the imaging system, although cost favors only the second reflective optic 504 being curved. This would be compatible with curved lenses desired of conventional eyewear. One or more refractive elements 506 (as field lenses or relay lenses) may be optionally employed between the PBS 508 and the first reflective optic 502 to help with imaging since the angular and spatial demands are less at this position. In general, the refractive elements 506 are operable to focus and converge a light beam, and direct it along a path as designed by the cut or shape of the refractive element.

In some embodiments, the second reflective optic 504 can be made semi-transparent and polarization sensitive to avoid immersion whilst maximizing display intensity. One method is to laminate polarization reflective film, such as 3M's DBEF, since any phase aberrations in this position of the system would cause minor distortions which are more acceptable than a displeasing soft focus that may otherwise be present.

In the embodiment illustrated in **FIGURE 5a****,** the single-panel HMD 500 includes a display panel 510, a PBS 508, LC switches 512 at the output ports of the PBS 508, refractive elements 506, and first and second reflective optic elements 502 and 504. The HMD 500 is shown to be planar with all reflecting elements having their central surface normals in the drawing plane. In some embodiments, it may be desirable to tilt the first reflecting optic element 502 so as to position the PBS 508 above the nose of the viewer. It may be assumed that all further embodiments of the present disclosure may not be limited to a planar optical set-up. The setup of the microdisplay panel 510, PBS 508, and LC switches 512 in FIGURE 5a is similar to that shown in FIGURE 2, wherein the embodiment employs symmetrical polarization and imaging optics. In FIGURE 5a, the display panel 510 emits an input light beam 515 incident upon the PBS 508, which splits the input light beam 515 into a first and second image output light beam 514 and 516 of substantially equal intensities. The light beam 514 has a first polarization and corresponds to a left-eye image. The light beam 514 is incident upon the first LC switch 512 and is modulated by the first LC switch 512. The second light beam 516 has a second polarization and corresponds to a right-eye image. The second light beam 516 is incident upon the second LC switch and is modulated by the second LC switch 512. The LC switches 512 are operable to either block or transmit the first and second image output light beams 514 and 516. Driving out of phase, similar to the embodiment of FIGURE 2, these switches 512 alternate the image-containing light beams 514 and 516. As previously stated, optional refractive optics 506 may be placed between the LC switches 512 and the first reflective optic 502 along the first and second light paths 514 and 516. After passing through the refractive optics 506, the light reflects off the first reflective optic 502, to the second reflective optic 504, and then is reflected to the viewer's eyes, wherein the first and second image output light beams 514 and 516 are directed to the left and right eye, respectively.

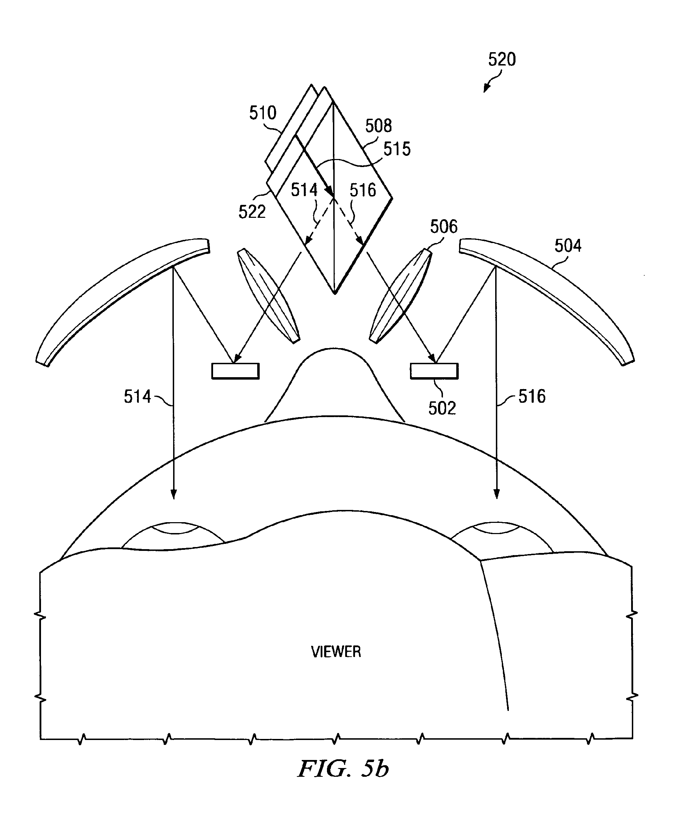

Referring to the embodiment illustrated in **FIGURE 5b****,** the single-panel HMD 520 is a variation of the embodiment in FIGURE 5a, wherein the embodiment further includes a single LC modulator 522 disposed between a microdisplay panel 510 and the input port of the PBS 508, in lieu of the LC switches 512 of FIGURE 5a. All further discussed embodiments in the present disclosure may employ this modification. In some embodiments, this modification favors a polarized panel output, which is typical of LC modulating panels. However, unpolarized displays may be used by incorporating a pre-polarizer adjacent to the panel 510 and LC switch 522, thus resulting in a greater than 50% system transmission loss. In the illustrated embodiment, the LC modulator 522 receives a polarized light beam 515 provided from the microdisplay panel 510 along a first light path. The LC modulator 522 is configured to modulate the polarized light beam 515 by manipulating the polarized light beam 515 between two possible orthogonal polarization states (e.g., sand p-polarized). The polarized light beam 515 is then incident upon the PBS 508, which either transmits or reflects the modulated polarized light beam 515 depending on the polarization of the light beam 515. The light beam 515 is directed along either a second light path 514 or a third light path 516 by the PBS 508, the second and third light paths 514 and 516 corresponding to image outputs for the left and right eyes, respectively. The polarized light beam 515 reflected along the second light path 514 is ultimately directed toward the viewer's left eye. The polarized light beam 515 transmitted along the third light path 516 is ultimately directed toward the viewer's right eye. In the illustrated embodiments, optional refractive optics 506 are placed between the output ports of the PBS 508 and the first reflective optic 502 along the second and third light paths 514 and 516. As such, the polarized light 515 passes through the refractive optics 506 and is then directed to a plurality of reflective elements that fold the second and third light paths 514 and 516. Along folded second and third light paths 514 and 516, the polarized light 515 reflects off the first reflective optics 502, travels to the second reflective optics 504, and then is reflected to the viewer's eyes.

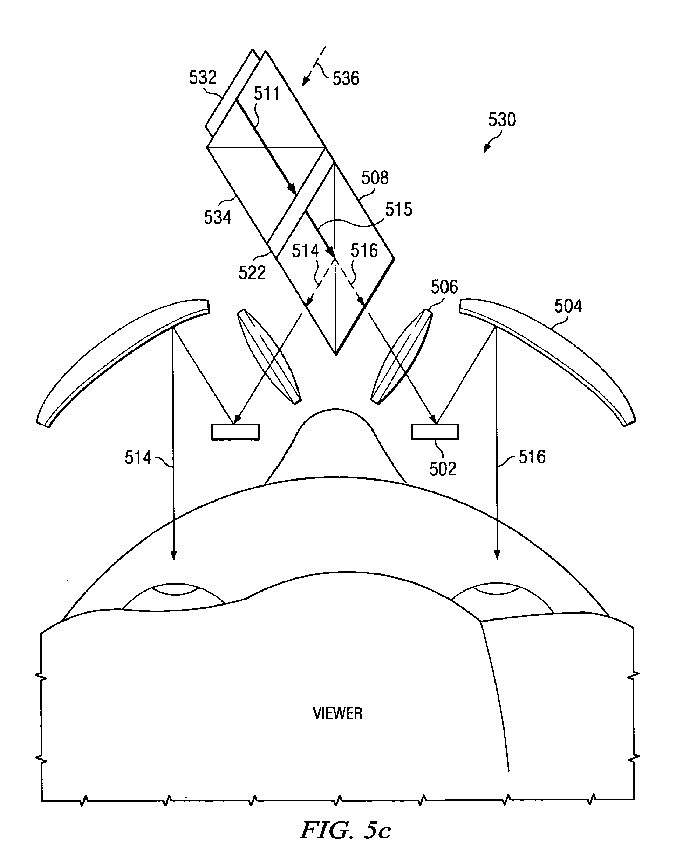

**FIGURE 5c** illustrates an embodiment similar to that presented in FIGURE 5b, wherein the panel of FIGURE 5b is replaced by a reflective liquid crystal on silicon (LCOS) microdisplay 532, and an additional PBS 534. The single-panel HMD 530 illustrated in FIGURE 5c further includes light emitting diodes (LEDs) 536 illuminating the reflective LCOS microdisplay 532. In this embodiment, an image is projected from the reflective LCOS microdisplay 532 as it is illuminated by LEDs 536. The first PBS 534 receives light from the LEDs 536, and reflects a portion of the light to the reflective LCOS microdisplay 532. Polarized light 511 emitted from the reflective LCOS microdisplay 532 provides sequential images for the left and right eyes. The light emitted from the LCOS panel 532 is analyzed in transmission by the first PBS 534, providing image information as for an emissive OLED display. This image-forming light 511 is transmitted by the first PBS 534, and received by the LC modulator 522. After receiving the polarized light beam 511 transmitted by the first PBS 534, the LC modulator 522 provides a substantially polarized light beam 515 to be directed by the second PBS toward the left or right eye. The imaging part of the HMD system is then that of the system embodiment of FIGURE 5b. Since the imaging and light-directing subsystems can be considered separate from the image-forming panel, all optical system embodiments so far presented could incorporate an LCOS panel by replacement of the display with the reflective panel/illumination module and introduction of any necessary polarization-manipulation elements such as retarder films, etc.

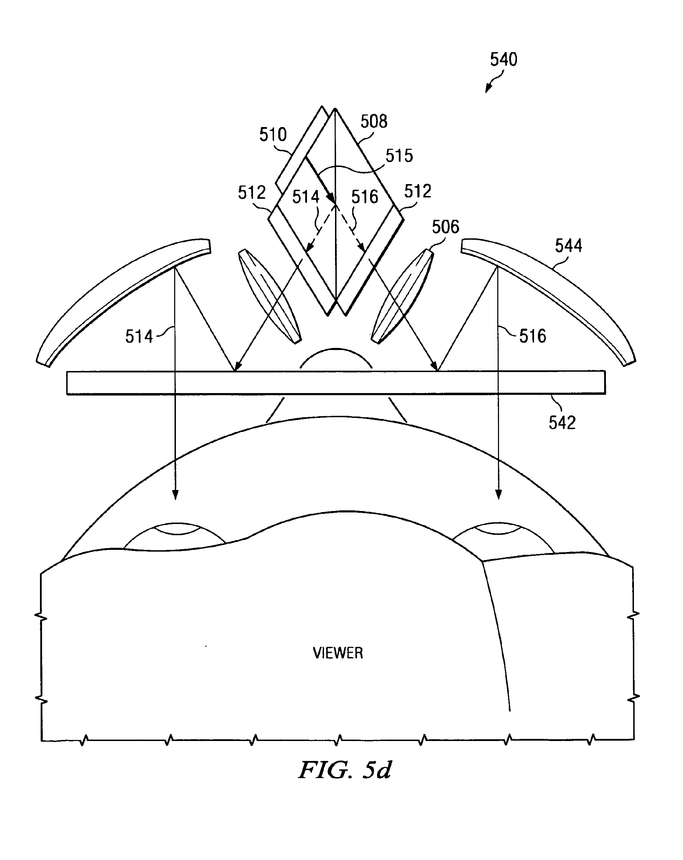

The embodiment illustrated in **FIGURE 5d** illustrates a single-panel HMD 540 which is a further variation of that shown in FIGURE 5a featuring a single first reflective element 542, wherein the single first reflective element 542 is a polarization sensitive mirror, and the second reflective element 544 further includes a polarization transforming film. This embodiment includes elements illustrated in FIGURE 4, wherein the first reflecting element 542 is made polarization sensitive using a wire grid plate (e.g., Proflux technology supplied by Moxtek Inc.) and is extended to cover the viewer's eyes. Light of substantially one polarization is transmitted by the reflecting element 542, and the rest of the light is reflected to the second reflective element 544 (a reflecting eyepiece) which has a polarization transforming film (e.g., a QWP) laminated to it. The second reflecting element 544 alters the polarization state such that it is substantially of one polarization to be transmitted by the first reflecting element 542. The polarization-altered light is then transmitted by the first reflective element 542 to the viewer's eyes. The benefit of this approach is to avoid possible obstruction of the light by the first reflecting element 542.

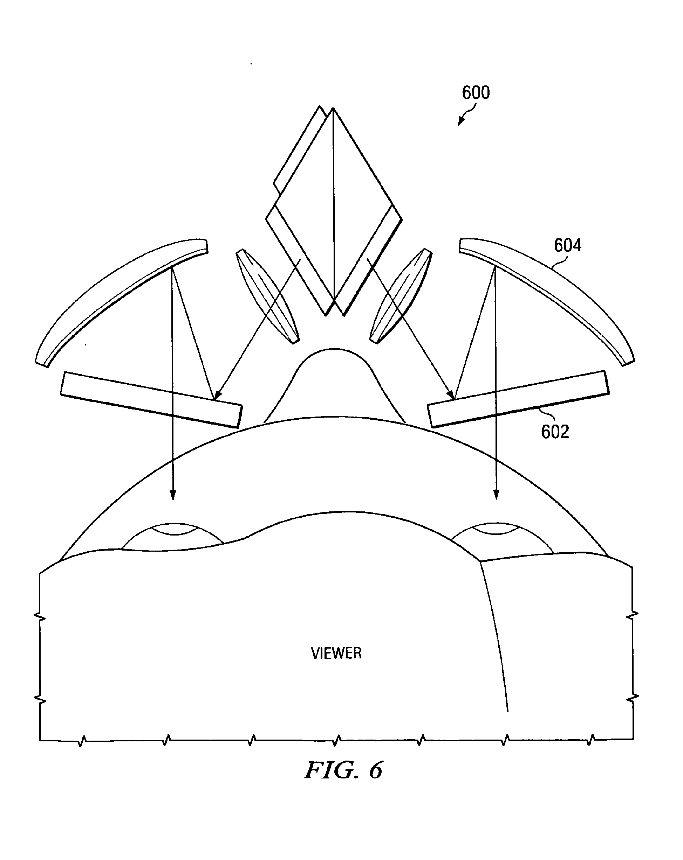

Referring to the embodiment illustrated in **FIGURE 6****,** the single-panel HMD 600 comprises an image-forming panel similar to that illustrated in FIGURE 5a. The embodiment features an imaging and light-directing subsystem similar to that illustrated in FIGURE 5d, wherein the HMD 600 features two first reflective plates 602, wherein the two first reflective plates 602 are substantially similar in composition to the first reflective element 542 of FIGURE 5d. Furthermore, in this embodiment, the first reflective plates 602 are rotated by approximately 22.5° with respect to the system's optic axis, allowing the eyepiece to be normal to the system's optic axis. The system makes a double-pass of the first reflecting optic 602 by suitable polarization selection and manipulation. A double-passage, as described by FIGURE 4, is achieved through the first reflecting element 602 by making it polarization dependent and having a polarization manipulating means (e.g., a QWP) adjacent the second reflecting element 604. The light paths in this embodiment are similar to those in FIGURE 5d, wherein light of substantially one polarization is transmitted by the first reflecting element 602, and the rest of the light is reflected to the second reflecting element 604 (a reflecting eyepiece) which has a polarization transforming film (e.g., a QWP) laminated to it. The second reflecting element 604 alters the polarization state such that it is substantially of one polarization to be transmitted by the first reflecting element 602. The polarization-altered light is then transmitted by the first reflective element 602 to the viewer's eyes.

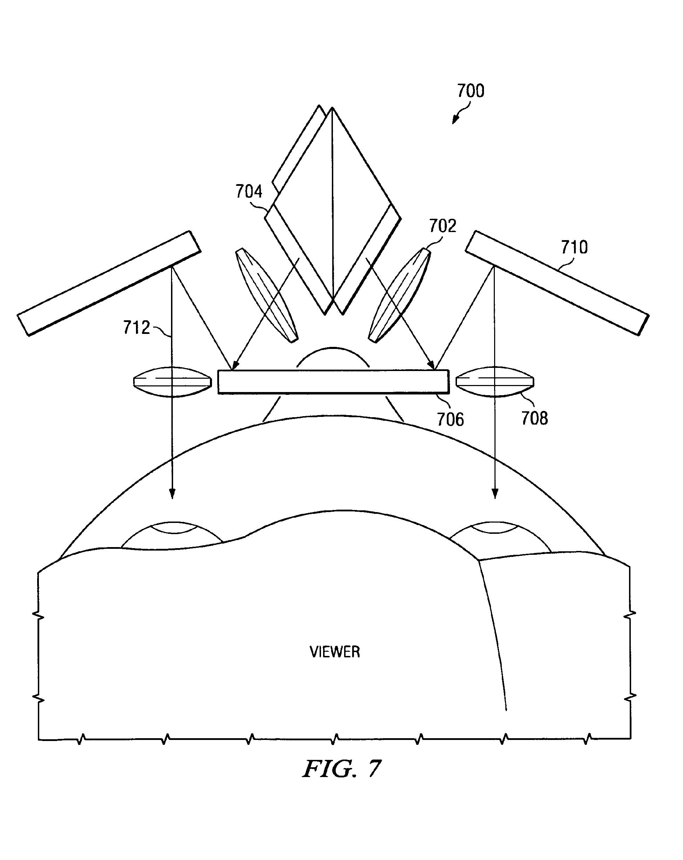

The system 700 illustrated in **FIGURE 7** features a refractive eyepiece made from one or more optical elements. In this embodiment, a first refractive optic 702 is positioned along the light path 712 between the LC switch 704 and the first mirror 706. A second refractive optic 708 is positioned along the light path 712 after the second mirror 710 to direct the light to the viewer's eye. This approach allows for more flexibility in aberration correction through introduction of two refractive elements 702 and 708 in the imaging path. In general, the more refracting surface present in an optical imaging system, the more correction of unwanted aberrations is possible. Examples of optical aberrations include distortions such as a rectangular display appearing to have curved edges, lateral color such as the RGB colors separating toward the edges of the image, and an image appearing unfocussed or soft.

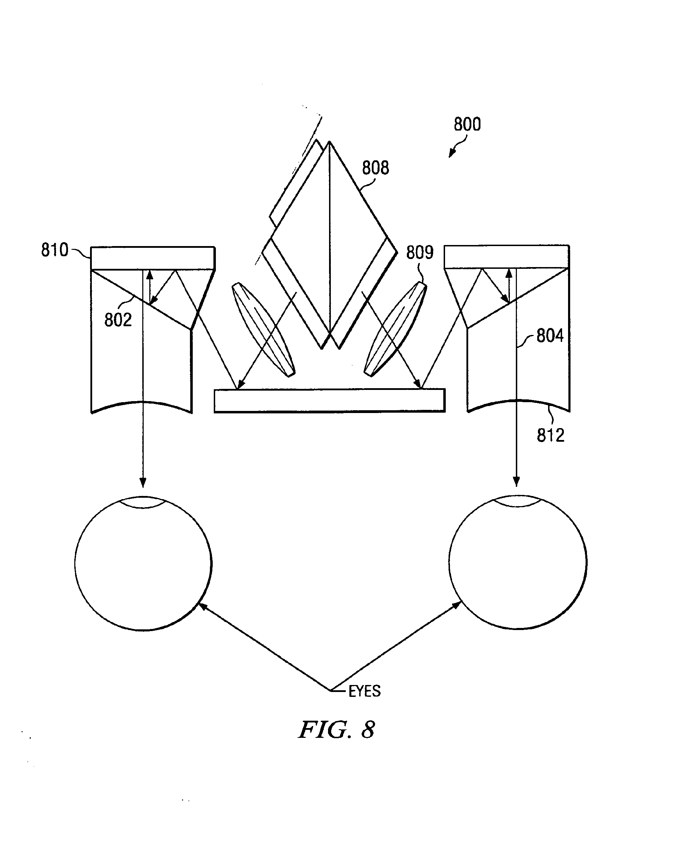

The system 800 illustrated in **FIGURE 8** incorporates a double-pass Total Internal Reflection (TIR) prism 802 in front of the eye to increase optical path 804 lengths. A TIR prism works on the principle that light within a high index material (e.g. glass) will reflect entirely at a surface bounding a lower index material (e.g. air) when it is incident at an angle less than a specific critical angle. At slightly higher incidence angles, very high transmission can be obtained. A TIR prism first reflects light at a high/low interface before allowing transmission through the same interface by virtue of an altered incidence angle. Increased incidence angles are provided by multiple reflections off non-parallel surfaces. In FIGURE 8, the TIR surface is drawn as the boundary between two glass elements. It is to be appreciated that this boundary may have a finite air gap with the surfaces coated for high transmission at incident angle greater than the critical angle. The double-pass through this TIR element increases working length of the optical system, which reduces the required power of optical elements and makes it easier to create large exit pupils. If the refractive optic 809 near the PBS 808 is implemented as a projection lens such that an image is formed in the plane of the mirror 810, then the mirror 810 can be replaced by an array of retroreflectors (e.g. 3M retroreflecting film), and a very wide field of view image may be achieved. The curved surface 812 of the optic element nearest the eye can optionally be flat, or spherical/aspheric to help with aberrations such as distortion.

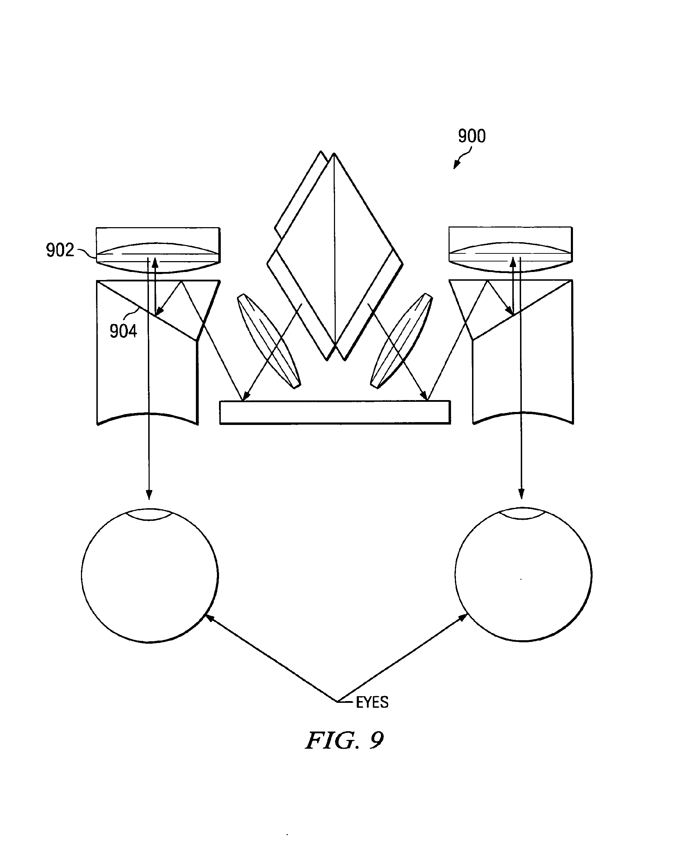

The system 900 illustrated in **FIGURE 9** is an embodiment similar to that presented in FIGURE 8, but includes a reflective Mangin lens 902 adjacent to the TIR prism 904. The reflective Mangin lens 902 is operable to distribute more of the optical power at each imaging surface. A Mangin lens is a refractive lens element with one side coated with a reflecting mirror surface and is used in reflection, providing one reflecting and two equal refracting surfaces. Sharing power between many surfaces is a conventional method of improving optical imaging quality, and is the reason high-resolution lenses have many optical elements.

It is to be appreciated that the embodiments described herein may be modified in accordance with the principles disclosed herein. For example, refractive elements may be distributed either side of the first reflecting mirror. Furthermore, the lens near the PBS could be a field lens (for controlling field curvature) or a relay lens (for increasing magnification). The lens is also optional, depending on the level of performance required (i.e. FOV, aberration control).

While various embodiments in accordance with the principles disclosed herein have been described above, it should be understood that they have been presented by way of example only, and not limitation. Thus, the breadth and scope of the invention(s) should not be limited by any of the above-described exemplary embodiments, but should be defined only in accordance with any claims issuing from this disclosure. Furthermore, the above advantages and features are provided in described embodiments, but shall not limit the application of such issued claims to processes and structures accomplishing any or all of the above advantages.

Additionally, the section headings herein are provided for consistency with the suggestions under 37 CFR 1.77 or otherwise to provide organizational cues. These headings shall not limit or characterize the invention(s) set out in any claims that may issue from this disclosure. Specifically and by way of example, although the headings refer to a "Technical Field," the claims should not be limited by the language chosen under this heading to describe the so-called field. Further, a description of a technology in the "Background" is not to be construed as an admission that certain technology is prior art to any invention(s) in this disclosure. Neither is the "Summary" to be considered as a characterization of the invention(s) set forth in issued claims. Furthermore, any reference in this disclosure to "invention" in the singular should not be used to argue that there is only a single point of novelty in this disclosure. Multiple inventions may be set forth according to the limitations of the multiple claims issuing from this disclosure, and such claims accordingly define the invention(s), and their equivalents, that are protected thereby. In all instances, the scope of such claims shall be considered on their own merits in light of this disclosure, but should not be constrained by the headings set forth herein.

## Claims

1. A single-panel head-mounted display system, operable to display temporally modulated stereoscopic images, the display system **characterized by** comprising:
a display panel (104) operable to provide an unpolarized image input light beam;
a polarizing beam splitter (108) operable to split the unpolarized image input light beam into first and second image output light beams having first and second polarizations, respectively, the first and second image output light beams corresponding to left-eye and right-eye images, respectively;
first and second liquid crystal switches (156, 157, 512) disposed in corresponding light paths of the first and second image output light beams;
wherein the first and second liquid crystal switches are operable to transmit or block the first and second light beams, respectively.

2. The display system of claim 1, further comprising at least one reflective optic element (502) operable to fold the light path of the first or second image output light beam and direct the first or second image output light beam to a viewer's left or right eye, respectively, or further comprising a plurality of reflective optic elements operable to fold light paths of the first and second image output light beams and direct the first and second image output light beams to a viewer's left and right eyes, respectively.

3. The display system of claim 2, having a plurality of reflective optic elements (542, 544) and wherein the plurality of reflective optic elements comprise first and second reflective optics, wherein the first reflective optic is operable to receive the first or second image output light beam and direct the first or second image output light beam to the second reflective optic, and the second reflective optic is operable to direct the first or second image output light beam to the viewer's left or right eye, respectively.

4. The display system of claim 3, wherein one or more of the following conditions apply:
a) the first reflective optic (542) is a polarization-sensitive mirror;
b) the second reflective optic is semi-transparent and polarization-sensitive;
c) the second reflective optic (544) comprises a polarization transforming film;
d) the second reflective optic (904) comprises an array of retroreflectors;
e) the second reflective optic comprises a reflective Mangin lens (902).

5. The display system of claim 1, further comprising a refractive optic (506) adjacent to the first or second liquid crystal switch, the refractive optic being operable to converge the first or second image output light beam.

6. The display system of claim 5, wherein the refractive optic is a double-pass Total Internal Reflection prism, or wherein the surface of the refractive optics is curved, flat, spherical, or aspheric.

7. The display system of any of the preceding claims, further comprising a polarization conditioning film adjacent to the first or second liquid crystal switch.

8. The display system of any of the preceding claims, wherein the light paths of the first and second image output light beams are symmetrical across an optical axis, the optical axis corresponding to the axis of symmetry between the eyes of a viewer.

9. A method for displaying a stereoscopic image using a single-panel head-mounted stereoscopic display system, the method comprising:
providing an unpolarized image input light beam;
splitting the unpolarized image input light beam using a polarizing beam splitter into first and second image output light beams having first and second polarizations, respectively; and
modulating by transmitting or blocking the first and second image output light beams, the modulated first and second image output light beams corresponding to left-eye and right-eye images, respectively.

## Patentansprüche

1. Am Kopf angebrachtes Einzelschirm-Anzeigesystem zum Anzeigen von zeitlich modulierten stereoskopischen Bildern, **dadurch gekennzeichnet, dass** das Anzeigesystem Folgendes aufweist:
einen Anzeigeschirm (104) zum Liefern eines unpolarisierten Bildeingabe-Lichtstrahls,
einen polarisierenden Strahlteiler (108) zum Aufteilen des unpolarisierten Bildeingabe-Lichtstrahls in erste und zweite Bildausgabe-Lichtstrahlen mit ersten bzw. zweiten Polarisationen, wobei die ersten und zweiten Bildausgabe-Lichtstrahlen den Bildern für das linke bzw. rechte Auge entsprechen,
erste und zweite Flüssigkristallschalter (156, 157 und 512), die in den entsprechenden Strahlengängen der ersten und zweiten Bildausgabe-Lichtstrahlen angeordnet sind,
wobei die ersten und zweiten Flüssigkristallschalter zum Durchlassen oder Blockieren der ersten bzw. zweiten Lichtstrahlen dienen.

2. Anzeigesystem nach Anspruch 1, weiter aufweisend mindestens ein reflektierendes optisches Element (502) zum Falten des Strahlengangs des ersten oder zweiten Bildausgabe-Lichtstrahls und Lenken des ersten oder zweiten Bildausgabe-Lichtstrahls auf das linke bzw. rechte Auge eines Betrachters oder weiter aufweisend mehrere reflektierende optische Elemente zum Falten des Strahlengangs der ersten und zweiten Bildausgabe-Lichtstrahlen und Lenken der ersten und zweiten Bildausgabe-Lichtstrahlen auf das linke bzw. rechte Auge eines Betrachters.

3. Anzeigesystem nach Anspruch 2 mit mehreren reflektierenden optischen Elementen (542 und 544), wobei die mehreren reflektierenden optischen Elemente erste und zweite Spiegeloptiken aufweisen und wobei die erste Spiegeloptik zum Empfangen des ersten oder zweiten Bildausgabe-Lichtstrahls und Lenken des ersten oder zweiten Bildausgabe-Lichtstrahls auf die zweite Spiegeloptik dient und die zweite Spiegeloptik zum Lenken des ersten oder zweiten Bildausgabe-Lichtstrahls auf das linke bzw. rechte Auge des Betrachters dient.

4. Anzeigesystem nach Anspruch 3, wobei eine oder mehrere der folgenden Bedingungen zutreffen:
a) die erste Spiegeloptik (542) ist ein polarisationsempfindlicher Spiegel,
b) die zweite Spiegeloptik ist halbdurchlässig und polarisationsempfindlich,
c) die zweite Spiegeloptik (544) weist eine polarisationstransformierende Beschichtung auf,
d) die zweite Spiegeloptik (904) weist eine Anordnung von Rückstrahlern auf,
e) die zweite Spiegeloptik weist eine reflektierende Mangin-Linse (902) auf.

5. Anzeigesystem nach Anspruch 1, weiter aufweisend eine Brechungsoptik (506) neben dem ersten oder zweiten Flüssigkristallschalter, wobei die Brechungsoptik dazu dient, den ersten oder zweiten Bildausgabe-Lichtstrahl konvergent zu bündeln.

6. Anzeigesystem nach Anspruch 5, wobei die Brechungsoptik ein Zweifach-Totalreflexionsprisma ist oder wobei die Oberfläche der Brechungsoptik gekrümmt, eben, sphärisch oder asphärisch ist.

7. Anzeigesystem nach einem der vorherigen Ansprüche, weiter aufweisend eine Polarisationskonditionierungsbeschichtung neben dem ersten oder zweiten Flüssigkristallschalter.

8. Anzeigesystem nach einem der vorherigen Ansprüche, wobei die Strahlengänge der ersten und zweiten Bildausgabe-Lichtstrahlen symmetrisch um eine optische Achse sind und die optische Achse der Symmetrieachse zwischen den Augen des Betrachters entspricht.

9. Verfahren zum Anzeigen von stereoskopischen Bildern mit einem am Kopf angebrachten stereoskopischen Einzelschirm-Anzeigesystem mit den Schritten:
Liefern eines unpolarisierten Bildeingabe-Lichtstrahls,
Aufteilen des unpolarisierten Bildeingabe-Lichtstrahls mit einem polarisierenden Strahlteiler in erste und zweite Bildausgabe-Lichtstrahlen mit ersten bzw. zweiten Polarisationen und
Modulieren durch Durchlassen oder Blockieren der ersten und zweiten Bildausgabe-Lichtstrahlen, wobei die modulierten ersten und zweiten Bildausgabe-Lichtstrahlen jeweils den Bildern für das linke bzw. rechte Auge entsprechen.

## Revendications

1. Système de visiocasque à panneau unique susceptible d'afficher des images stéréoscopiques temporairement modulées,
ce système étant **caractérisé en ce qu'**il comprend :
un panneau d'affichage (104) susceptible de fournir un faisceau lumineux d'entrée d'image non polarisé,
un séparateur de faisceau à polarisation (108) susceptible de séparer le faisceau lumineux d'entrée d'image non polarisé en un premier et un second faisceau lumineux de sortie d'image ayant respectivement une première et une seconde polarisation, le premier et le second faisceau lumineux de sortie d'image correspondant respectivement à une image pour l'oeil droit et une image pour l'oeil gauche,
des premiers et seconds commutateurs à cristaux liquides (156, 157, 512) montés sur les chemins optiques correspondant du premier et du second faisceau lumineux de sortie d'image, les premiers et seconds commutateurs à cristaux liquides étant respectivement susceptibles de transmettre ou de bloquer le premier et le second faisceau lumineux.

2. Système conforme à la revendication 1, comprenant au moins un élément optique réfléchissant (502) susceptible de dévier le chemin optique du premier ou du second faisceau lumineux de sortie d'image et de diriger le premier ou le second faisceau lumineux de sortie d'image respectivement vers l'oeil gauche ou l'oeil droit d'un observateur ou comprenant en outre plusieurs éléments optiques réfléchissants susceptibles de dévier les chemins optiques du premier et du second faisceau lumineux de sortie d'image et de diriger respectivement le premier et le second faisceau de sortie d'image vers l'oeil gauche et l'oeil droit d'un observateur.

3. Système conforme à la revendication 2, comportant plusieurs éléments optiques réfléchissants (542, 544), dans lequel ces éléments optiques réfléchissants comprennent des premiers et des seconds composants optiques réfléchissants, le premier composant optique réfléchissant est susceptible de recevoir le premier ou le second faisceau lumineux de sortie d'image et de diriger le premier ou le second faisceau lumineux de sortie d'image vers le second composant optique réfléchissant, et le second composant optique réfléchissant est susceptible de diriger le premier ou le second faisceau lumineux de sortie d'image respectivement vers l'oeil gauche ou l'oeil droit de l'observateur.

4. Système conforme à la revendication 3, dans lequel une ou plusieurs des conditions suivantes s'appliquent :
a) le premier composant optique réfléchissant (542) est un miroir sensible à la polarisation,
b) le second composant optique réfléchissant est semi-transparent et sensible à la polarisation,
c) le second composant optique réfléchissant (544) comprend un film de transformation de la polarisation,
d) le second composant optique réfléchissant (904) comporte un ensemble de rétro réflecteurs,
e) le second composant optique réfléchissant comprend une lentille de Mangin réfléchissante (902).

5. Système conforme à la revendication 1, comprenant en outre un composant réfringent (506) adjacent au premier ou au second commutateur à cristaux liquides, ce composant optique réfringent étant susceptible de faire converger le premier ou le second faisceau lumineux de sortie d'image.

6. Système conforme à la revendication 5, dans lequel le composant optique réfringent est un prisme à réflexion interne totale à deux voies ou la surface du composant optique réfringent est incurvée plane, sphérique ou asphérique.

7. Système conforme à l'une quelconque des revendications précédentes, comprenant en outre un film de conditionnement de la polarisation adjacent au premier ou au second commutateur à cristaux liquides.

8. Système conforme à l'une quelconque des revendications précédentes, dans lequel les chemins optiques du premier et du second faisceau lumineux de sortie d'image sont symétriques de part et d'autre d'un axe optique, cet axe optique correspondant à l'axe de symétrie entre les yeux d'un observateur.

9. Procédé permettant d'afficher une image stéréoscopique en utilisant un système visiocasque à panneau unique comprenant les étapes consistant à :
se procurer un faisceau lumineux d'entrée d'image non polarisé,
séparer le faisceau lumineux d'entrée d'image non polarisé en utilisant un séparateur de faisceaux à polarisation en un premier et un second faisceau lumineux de sortie d'image ayant respectivement une première et une seconde polarisation, et
effectuer une modulation en transmettant ou en bloquant le premier et le second faisceau lumineux de sortie d'image, le premier et le second faisceau lumineux de sortie d'image modulé correspondant respectivement à des image pour l'oeil droit et pour l'oeil gauche.
